## Europäisches Patentamt

## European Patent Office

## Office européen des brevets

(19)

(11) Publication number: **0 232 979**
**B1**

(12) **EUROPEAN PATENT SPECIFICATION**

(45) Date of publication of the patent specification:
**04.07.90**

(51) Int. Cl.⁵: **F16H 37/02**

(21) Application number: **87300237.2**

(22) Date of filing: **12.01.87**

(54) **Geared-neutral continuously variable transmission.**

(30) Priority: **03.02.86 US 825153**

(43) Date of publication of application:
**19.08.87 Bulletin 87/34**

(45) Publication of the grant of the patent:
**04.07.90 Bulletin 90/27**

(84) Designated Contracting States:
**AT DE FR GB IT SE**

(56) References cited:
**DE-A- 2 651 629**
**DE-A- 3 124 070**
**GB-A- 1 078 791**
**GB-A- 2 045 368**
**GB-A- 2 115 091**

**LOOMAN Zahnradgetriebe, Berlin 1970, pages 53 to 70**

(73) Proprietor: **GENERAL MOTORS CORPORATION,**
General Motors Building 3044 West Grand Boulevard,
Detroit Michigan 48202(US)

(72) Inventor: **Macey, James Peter, 1052 Chester,**
**Birmingham Michigan 48009(US)**
Inventor: **Vahabzadeh, Hamid, 2619 West Avon Road,**
**Rochester Hills Michigan 48063(US)**

(74) Representative: **Denton, Michael John et al, Patent**
Section - Luton Office (F6) Vauxhall Motors Limited P.O.
Box 3 Kimpton Road, Luton Bedfordshire LU2 0SY(GB)

ACTORUM AG

## Description

This invention relates to continuously variable transmissions as specified in the preamble of claim I, for example as disclosed in GB-A 2 045 368.

It is well-known in the prior art for power transmissions to utilise continuously variable friction drives, such as V-belt drives, in parallel with a chain or other fixed-ratio drive, to provide a geared-neutral continuously variable transmission, such a transmission being shown for example in the said GB-A 2 045 368. In such transmissions, the fixed-ratio drive is drivingly connected between the input and one member of the planetary gear set, whereas the variable-ratio friction drive is drivingly connected between the input and another member of the planetary gear set. The third member of the planetary gear set drives the transmission output.

It is also well-known that by controlling the relative speeds of the members of a planetary gear set, zero output speed can be obtained whilst the two other members of the planetary gear set are rotating. In this condition the planetary gear set is in neutral, and thus the condition is referred to by the term "geared neutral".

In the prior-art transmissions, the fixed-ratio mechanism has been constructed to be continuously drivingly connected to the planetary gear set. As a result, the fixed-ratio mechanism is continuously in rotation during all phases of operation. Such rotation causes a reduction in the overall transmission efficiency, and an increase in system noise.

In other known arrangements, GB-A-1 078 791 discloses a two-mode geared-neutral arrangement in which the transition from the first to the second mode is done in a non-synchronous manner. In an article by J Looman in Zahnradgetriebe (Berlin 1970) pages 53 to 70 there is disclosed a single mode geared-neutral arrangement. A combination of these arrangements has the disadvantages previously mentioned.

The present invention is concerned with overcoming the disadvantages of the prior-art transmissions.

To this end a continuously variable transmission in accordance with the present invention is characterised over GB-B-2 045 368 by the features specified in the characterising portion of claim 1.

Thus in a continuously variable transmission in accordance with the present invention, selectively operable friction clutches are connected to the input and output respectively of the fixed-ratio drive, whereby, to effectively remove the fixed-ratio drive from the power transmission path, both of the friction clutches are disengaged.

In a continuously variable transmission in accordance with the present invention, also, a one-way clutch is connected in parallel with the friction clutch disposed on the output side of the fixed-ratio drive, this one-way clutch permitting the first forward drive mode to be selected with the engagement of only the friction clutch disposed on the input side of the fixed-ratio drive.

The present invention thus makes available an improved continuously variable transmission of the geared-neutral type wherein the fixed-ratio mechanism can be removed from the transmission drive path by operation of a pair of disengageable clutches disposed at the input and output respectively of the fixed-ratio drive mechanism.

The invention also makes available an improved continuously variable power transmission of the geared-neutral type having an input shaft and an output shaft with a variable-ratio friction drive, a fixed-ratio drive and a planetary gear arrangement operatively connected between the shafts, wherein the planetary gear arrangement is connected to both the variable-ratio drive and the fixed-ratio drive in low speed forward and reverse drive modes, and wherein the fixed-ratio drive is disengaged from both the input shaft and the planetary gear arrangement in a high speed forward range mode.

In the drawing:

Figure I is a schematic representation of a preferred embodiment of a continuously variable power transmission in accordance with the present invention; and

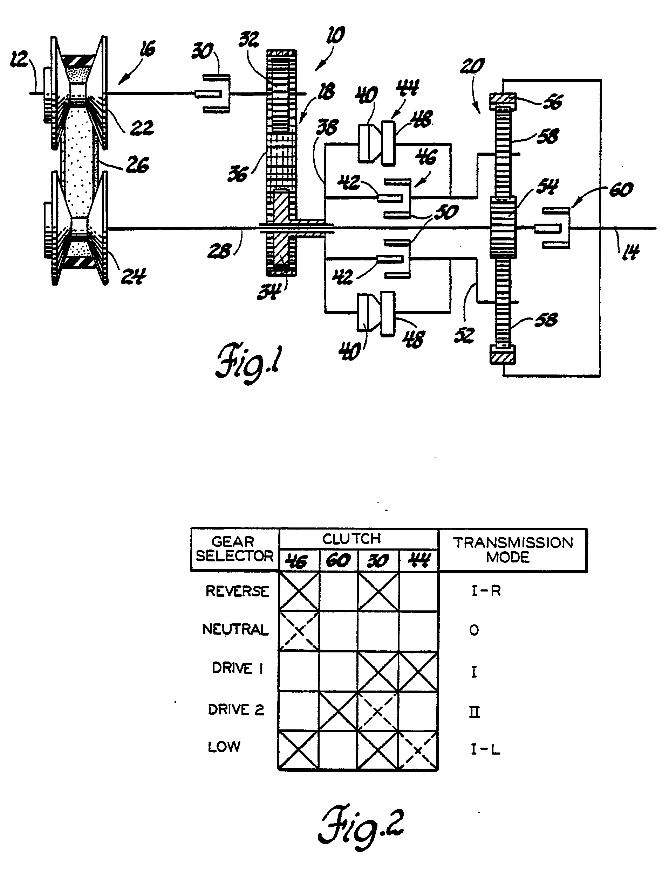

Figure 2 is a chart depicting the operating conditions of a plurality of clutches which control operation of the power transmission of Figure I.

With reference now to the drawing, there is seen in Figure I a continuously variable transmission of the geared-neutral type generally designated I0. This transmission incorporates an input shaft I2, an output shaft I4, a variable-ratio belt drive I6, a fixed-ratio chain drive I8 and a planetary gear set 20. The variable-ratio belt drive I6 and the fixed-ratio chain drive I8 are operatively connected in parallel driving relation between the input shaft I2 and the planetary gear set 20. The planetary gear set 20 is drivingly connected to the output shaft I4.

The variable-ratio belt drive I6 is a conventional drive unit having an input pulley member 22 and a output pulley member 24 drivingly interconnected by means of a belt member 26. The variable-ratio drive I6 is controlled in a conventional manner such that the drive ratio between the input and output thereof can be varied from a maximum underdrive condition to a maximum overdrive condition. The input pulley member 22 of the variable-ratio drive I6 is continuously drivingly connected to the transmission input shaft I2, and the output 24 of the variable-ratio drive I6 is continuously drivingly connected to a variable-ratio output shaft 28.

The transmission input shaft I2 is continuously drivingly connected to the input side of a selectively engageable friction clutch 30, the output side of which is connected to a sprocket 32 which forms the input member for the fixed-ratio chain drive I8.

The fixed-ratio chain drive I8 also includes an output sprocket 34, and a flexible chain mechanism 36 which drivingly interconnects the input sprocket 32 and the output sprocket 34. The output sprocket 34 is drivingly connected to a hub member 38.

The hub member 38 is drivingly connected to input members 40 and 42 of a one-way clutch 44 and of a friction clutch 46 respectively. Output members 48 and 50 of the one-way clutch 44 and of the friction clutch 46 respectively are both drivingly connected to a planet carrier member 52 which is a component of the planetary gear set 20.

The planetary gear set 20 also includes a sun gear 54 drivingly connected to the variable-ratio output shaft 28, a ring gear 56 drivingly connected to the transmission output shaft 14, and a plurality of pinion gears 58 which mesh with the sun gear 54 and the ring gear 56 and are rotatably mounted on the planet carrier member 52. A direct friction clutch 60 is selectively operable to provide a direct-drive connection between the output pulley member 24 of the variable-ratio belt drive 16 and the transmission output shaft 14.

The friction clutches 30, 46 and 60 may be constructed in accordance with any of the well-known selectively engageable friction clutch mechanisms. These clutches can be engaged and controlled in a well-known manner using conventional mechanisms: the clutches may be fluid-operated, mechanically operated or electrically operated. The operation and control of such devices is well-known in the transmission art.

The one-way clutch 44 may be constructed in accordance with the conventional one-way drive mechanisms.

The transmission input shaft 12 is connected to be driven by a prime mover such as a gasoline engine (not shown), and the transmission output shaft 14 is drivingly connected to the driving wheels (not shown) of a passenger vehicle. Such drive mechanisms and prime movers are well-known in the art, such that further description of them and their operation is superfluous.

When the transmission input shaft 12 is rotated by the prime mover, the variable-ratio belt drive 16 will effect rotation of the sun gear 54. The speed of the sun gear 54 relative to the transmission input shaft 12 is determined by the ratio established in the variable-ratio belt drive 16. With the clutch 30 engaged, the input members 40 and 42 of the one-way clutch 44 and of the friction clutch 46 will be rotated at a speed relative to the transmission input shaft 12 that is determined by the drive ratio of the fixed-ratio chain drive 18.

With the sun gear 54 being rotated and the ring gear 56 being held stationary by the reaction of the vehicle on the transmission output shaft 14, the planet carrier 52 will rotate in the same direction as the sun gear 54 at a ratio determined by the number of teeth on the sun gear 54 and on the ring gear 56. By appropriate selection of the ratio in the variable-ratio belt drive 16, the input and output members of the one-way clutch 44 and of the friction clutch 46 will be rotating at the same speed. However, since the transmission output shaft 14 is not rotating, the transmission is considered to be in neutral, and the friction clutch 46 can be engaged or disengaged as desired. For example, if the DRIVE 1 condition, as shown in Figure 2, is desired, the friction clutch 46 is disengaged.

If, at this time, the ratio in the variable-ratio belt drive 16 is reduced towards the maximum underdrive condition, the transmission operates in the first forward mode. The sun gear 54 will rotate at reduced speed, and the planet carrier 52 will be driven at a speed equal to the output speed of the fixed-ratio chain drive 18 by way of the one-way clutch 44. In this instance, the transmission output shaft 14 will rotate in the same direction as the transmission input shaft 12, but at a much reduced speed. The variable-ratio belt drive becomes a rotating reaction member during such operation.

When the variable-ratio belt drive 16 reaches the maximum underdrive ratio, the sun gear 54, the planet carrier 52 and the ring gear 56 will be rotating at the same speed. This is possible due to the various ratios that are present in the belt drive, the chain drive and the planetary gear set.

At this point in the operation, the direct friction clutch 60 can be engaged under synchronous conditions, since the speeds of the transmission input shaft 14 and of the sun gear 54 are identical. Any further increase in the variable ratio after engagement of the clutch 30 will cause the clutch 44 to overrun, and all drive forces will be transmitted through the variable-ratio drive. The transmission is then operating in the high forward mode, shown as DRIVE 2 in Figure 2. At the same time, the clutch 30 may be disengaged, such that the fixed-ratio chain drive 18 will not be rotating.

To increase the drive speed, the drive ratio of the variable-ratio belt drive 16 can be increased towards the maximum overdrive condition, thereby resulting in an increase in vehicle speed. Return of the transmission to a neutral condition is accomplished by reversing the foregoing operations.

In the geared-neutral condition, and also during Mode 1 operation, the friction clutch 46 can be engaged. This will provide a positive-drive connection between the output sprocket 34 and the planet carrier 52.

Operation of the transmission in the forward direction is accomplished in a manner similar to that described above for the condition with the one-way device 44 operable.

A shift from the LOW range to the DRIVE 2 range is accomplished in a similar manner, the clutch 60 being engaged. However, to further increase the forward speed, both of the clutches 30 and 46 will be disengaged. It will be evident that in the high forward speed operating range the fixed-ratio chain drive 18 is removed from the drive path, and thus does not provide a loss in efficiency and generation of noise during the high forward speed operation. The one-way device 44, during overrun, has low friction characteristics similar to an anti-friction bearing.

From the geared-neutral condition with both of the clutches 30 and 46 engaged, the transmission can be operated in a reverse direction of rotation by increasing the drive ratio of the variable-ratio belt drive 16 towards the maximum overdrive condition. A ratio change of the variable-ratio belt drive 16 in this direction will result in an increase in the speed of the sun gear 54. The speed of the planet carrier 52 is controlled by the fixed-ratio chain drive 18, and will remain constant. With the speed of the sun gear 54 increasing, the speed of the ring gear 56 will also increase, but in a negative (reverse) direction. Since the ring gear 56 is rotating reversely relative to the transmission input shaft l2, the transmission output shaft l4 will rotate in reverse. The reverse speed ratio of the transmission output shaft l4 is determined by the ratio in the variable-ratio belt drive l6 and the speed of the input shaft l2.

During neutral operation, as is seen from the chart in Figure 2, the clutches 46 and 30 may be engaged or disengaged as desired. A positive neutral is provided if the clutch 30 is disengaged. In the REVERSE drive ratio the clutches 46 and 30 must be engaged, and in the LOW drive range the clutches 46 and 30 must be engaged. The DRIVE I range, which is identical to the LOW range from a ratio standpoint, is obtained by engagement of the clutch 30 and operation of the one-way device 44. The DRIVE 2 range is obtained by engagement of the clutch 60. During the DRIVE 2 range (high forward speed range), the one-way clutch 44 overruns. This permits the ratio interchange between DRIVE I and DRIVE 2 to be relatively less complicated than the ratio interchange between DRIVE 2 and LOW. However, the DRIVE I range does not provide engine braking, should that condition be desirable, whereas both the LOW and REVERSE ranges do provide engine braking. Engine braking is also available in the DRIVE 2 range.

As previously mentioned, the fixed-ratio chain drive l8 is effectively removed from the drive path during the DRIVE 2 range (high forward speed range), thus improving the overall operating efficiency and reducing the noise generation of the transmission.

The fixed-ratio drive l8 is depicted and described as a chain drive mechanism; however, a positive-drive mechanism such as intermeshing gears could alternatively be utilised.

The variable-ratio drive l6 is shown as a flexible belt drive; however, other variable-ratio friction drives could alternatively be used within the scope of the invention.

Likewise, combining-type gear arrangements other than coaxial planetary units could be incorporated into a transmission in accordance with the present invention.

## Claims

I. A continuously variable transmission comprising: input drive means (l2); output drive means (l4); a variable-ratio friction drive means (l6) drivingly connected to the input drive means (l2) and including a driven shaft (28); fixed-ratio drive means (l8) having an input shaft and an output shaft; selectively engageable first clutch means (30) for connecting the input drive means (l2) to the input shaft; and planetary gear means (20) having a sun gear (54) connected to the driven shaft (28), a ring gear (56) drivingly connected to the output drive means (l4), and carrier (52) and pinion gear (58) means drivingly connected between the sun gear (54) and the ring gear (56); characterised in that second clutch means (60) is selectively engageable for connecting the sun gear (54) to the output drive means (l4), third clutch means (46) is selectively engageable for connecting the output shaft to the carrier (52) and pinion gear (58) means, and one-way clutch means (44) is disposed in parallel drive relation with the third clutch means (46) for transmitting torque to the carrier (52) and pinion gear (58) means when the third clutch means (46) is disengaged and the output shaft is tending to rotate faster than the carrier (52) and pinion gear means (58).

2. A continuously variable transmission according to claim I, characterised in that the variable-ratio friction drive means (l6) comprises a variable-ratio friction belt drive means.

3. A continuously variable transmission according to claim I or 2, characterised in that the fixed-ratio drive means (l8) comprises a fixed-ratio chain drive.

4. A continuously variable transmission according to claim I, characterised in that the variable-ratio friction drive means (l6) includes a variable input means (22) and a variable output means (24), with the driven shaft (28) connected to the variable output means (24), and that the first (30) and third clutch means (46) are engageable to provide a low forward drive range, and the second clutch means (60) is engageable to provide a high forward drive range.

## Patentansprüche

1. Stufenlos veränderbares Getriebe mit: Eingangs-Antriebsmittel (12); Ausgangs-Antriebsmittel (14); einem mit dem Eingangs-Antriebsmittel (12) zum Antrieb verbundenes Friktions-Antriebsmittel (16) mit stufenlosem Verhältnis, das eine angetriebene Welle (28) enthält; Festverhältnis-Antriebsmittel (18) mit einer Eingangswelle und einer Ausgangswelle; wahlweise in Eingriff bringbarem ersten Kupplungsmittel (30) zum Verbinden des Eingangs-Antriebsmittels (12) mit der Eingangswelle, und Planetengetriebemittel (20) mit einem mit der angetriebenen Welle (28) verbundenen Sonnenrad (54), einem zum Antrieb mit dem Ausgangs-Antriebsmittel (14) verbundenem Ringzahnrad (56) und Träger- (52) und Ritzel- (58) -Zahnradmitteln, die zum Antrieb zwischen dem Sonnenzahnrad (54) und dem Ringzahnrad (56) angeschlossen sind; dadurch gekennzeichnet, daß zweites Kupplungsmittel (60) vorgesehen ist zum wahlweisen Eingriff zur Verbindung des Sonnenzahnrades (54) mit dem Ausgangs-Antriebsmittel (14), daß drittes Kupplungsmittel (46) wahlweisen in Eingriff bringbar ist zur Verbindung der Ausgangswelle mit dem Träger- (52) und Ritzel- (58) -Zahnradmittel und daß Einweg-Kupplungsmittel (44) in Parallelantriebsbeziehung mit dem dritten Kupplungsmittel (46) angeordnet ist zur Übertragung von Drehmoment zu dem Träger- (52) und Ritzel- (58) -Zahnradmittel, wenn das dritte Kupplungsmittel (46) gelöst ist und die Ausgangswelle dazu neigt, rascher als das Träger- (52) und Ritzel- (58) -Zahnradmittel zu rotieren.

2. Stufenlos veränderbares Getriebe nach Anspruch 1, dadurch gekennzeichnet, daß das Friktions-Antriebsmittel (16) mit stufenlosem Verhältnis ein Riemen-Friktions-Antriebsmittel mit stufenlosem Verhältnis umfaßt.

3. Stufenlos veränderbares Getriebe nach Anspruch 1 oder 2, dadurch gekennzeichnet, daß das Festverhältnis-Antriebsmittel (18) einen Festverhältnis-Kettenantrieb umfaßt.

4. Stufenlos veränderbares Getriebe nach Anspruch 1, dadurch gekennzeichnet, daß das Friktions-Antriebsmittel (16) mit stufenlosem Verhältnis ein stufenloses Eingangsmittel (22) und ein stufenloses Ausgangsmittel (24) umfaßt, wobei die angetriebene Welle (28) mit dem stufenlosen Ausgangsmittel (24) verbunden ist, und daß das erste (30) und das dritte (46) Kupplungsmittel in Eingriff bringbar sind, um einen niedrigen Vorwärtsantriebsbereich zu schaffen, und das zweite Kupplungsmittel (60) in Eingriff bringbar ist, um einen hohen Vorwärtsantriebsbereich zu schaffen.

**Revendications**

1. Transmission à variation continue comprenant: des moyens d'entraînement d'entrée (12); des moyens d'entraînement de sortie (14), des moyens d'entraînement à friction à rapport variable (16) accouplés cinématiquement aux moyens d'entraînement d'entrée (12) et comprenant un arbre entraîné (28); des moyens d'entraînement à rapport fixe (18) comprenant un arbre d'entrée et un arbre de sortie, des premiers moyens d'embrayage (30) pouvant être embrayés sélectivement, servant à accoupler les moyens d'entraînement d'entrée (12) à l'arbre d'entrée; des moyens à engrenages épicycloïdaux (20) comprenant une roue planétaire (54) accouplée à l'arbre entraîné (28), une couronne (51) accouplée cinématiquement aux moyens d'entraînement de sortie (14), et un porte-satellites (52) muni de pignons satellites (58) interposés cinématiquement entre la roue planétaire (54) et la couronne (56), caractérisée en ce que des deuxièmes moyens d'embrayage (60) peuvent être sélectivement embrayés pour accoupler la roue planétaire (54) aux moyens d'entraînement de sortie (14), des troisièmes moyens d'embrayage (46) pouvant être sélectivement embrayés pour accoupler l'arbre de sortie au porte-satellite (52) et aux pignons satellites (58), et des moyens d'accouplement unidirectionnels (44) sont disposés dans une relation d'entraînement en parallèle avec les troisièmes moyens d'embrayage (46) pour transmettre un couple au porte-satellites (52) et aux satellites (58) lorsque les troisièmes moyens d'embrayage (46) sont débrayes et que l'arbre de sortie tend à tourner plus vite que le porte-satellites (52) et que les pignons satellites (58).

2. Transmission à variation continue selon la revendication 1, caractérisée en ce que les moyens d'entraînement à friction à rapport variable (16) comprennent des moyens d'entraînement à courroie à friction à rapport variable.

3. Transmission à variation continue selon la revendication 1 ou la revendication 2, caractérisée en ce que les moyens d'entraînement à rapport fixe (18) comprennent un entraînement à chaîne à rapport fixe.

4. Transmission à variation continue selon la revendication 1, caractérisée en ce que les moyens d'entraînement à friction à rapport variable (16) comprennent des moyens d'entrée variables (22) et des moyens de sortie variables (24), l'arbre entraîné (28) étant accouplé aux moyens de sortie variables (24) et en ce que les premiers (30) et troisièmes moyens d'embrayage (46) peuvent être embrayés pour établir une gamme basse de marche avant et les deuxièmes moyens d'embrayage (60) peuvent être embrayés pour établir une gamme haute de marche avant.

EP 0 232 979 B1

Fig.1

| GEAR SELECTOR | CLUTCH | | | | TRANSMISSION MODE |
|---|---|---|---|---|---|
| | 46 | 60 | 30 | 44 | |
| REVERSE | X | | X | | I-R |
| NEUTRAL | X | | | | O |
| DRIVE 1 | | | X | X | I |
| DRIVE 2 | | X | X | X | II |
| LOW | X | X | X | X | I-L |

Fig.2